# EUROPEAN PATENT APPLICATION

(11) **EP 1 818 371 A1**
(43) Date of publication of application: **15.08.2007**
(21) Application number: 06425085.5
(22) Date of filing: 14.02.2006
(51) Int. Cl.: C09D 11/00

(54) **Inks and printing process to obtain multicolor in-register graphic effects**

(71) Applicant: Kiian S.r.l., 22070 Luisago (Como) (IT)
(72) Inventor: Manoukian, Harutiun, 22070 Luisago (CO) (IT); Cimatti, Marco, 22070 Luisago (CO) (IT)
(74) Representative: Gislon, Gabriele

(57) **Abstract**

In a print process for providing multicoloured effects in register, on a transparent backing (4) are sequentially coated on full background a first printable ink (1) soluble in basic aqueous solutions, a second printable ink (2) soluble in basic aqueous solutions, at least partially overlapping said two inks; then a resin layer (3) insoluble in basic solutions is coated on a selected area of the outer ink layer (2) to define an unprotected portion of inks soluble in basic solutions and finally the thus coated backing is dipped in a basic solution to remove those parts (6) of coloured inks that are not protected by the externally coated resin, which is insoluble in the basic solution.

## Description

The present invention relates to inks and a process for printing multicoloured graphic images in register, as well as the effects obtained therewith.

More particularly, the invention relates to printable compositions, i.e. inks, and a printing process for obtaining a plurality of coloured elements in register, of micro-characters or micro-drawings on thin and transparent plastic films by means of this printing.

The object of the present invention is to obtain micro-inscriptions or micro-drawings perfectly in register by overlapping printings of multicoloured inks such that the inscriptions or the drawings in register are perfectly visible both for being viewed from the printing side (recto) and from the side of the transparent film (verso). This object is achieved by means of the present invention which relates to inks for providing said images, characterized according to claim 1.

According to the invention, the inks comprise a resin with acid number greater than 20, and within the range of 20 and 250, said resin being provided in the ink composition in an amount sufficient to ensure that the printed ink will be soluble in a basic solution.

The system according to the invention comprises, for example, a first printable ink composition, coloured and soluble in a basic solution; a second printable composition coloured in a different colour from the first composition, compatible with the first printable composition and also soluble in a basic solution, and a third transparent printable composition, compatible with at least said second resin, said third composition being insoluble in basic solutions.

A further object of the invention is the use of resins with acid number within the range of 20 and 250 for producing alkali-soluble inks.

The invention further relates to a process for providing safety products by means of printing the compositions as indicated above, characterized according to claim 6.

According to this process, said first printable composition and said second printable composition are sequentially coated on a transparent backing, by overlapping said two compositions, either completely or partially, then an outer layer of alkali-insoluble resin is coated on a selected area to define a coloured element (either in positive or in negative) and the whole assembly is finally immersed in a basic solution to remove those coloured ink parts that are not protected by the resin insoluble in said solution. The alkali-insoluble resin thus acts as a resist for those portions on which it is coated.

The concept of resist is known and is normally used in fields completely different and far from the one of the present invention, such as in the production of printed circuits, glass and metal processing.

In these fields, other than the one of the present invention, compositions are used that are designated as "resists", meaning therewith products that can be printed on various supports which have been previously varnished or printed with inks or varnishes that have to be selectively and temporarily protected when processings have to be carried out on the same or predetermined areas of the same.

At the end of the cycle, the resists can be left on the product (permanent resists) or they can be removed with mechanical processings or in solution in suitable reactants (temporary resists).

With reference to a known product, the wafers carrying printed circuits, said wafers carry both permanent resists on the surface thereof, typically the "solder resist", which is intended to protect the circuit upon the operations of tin-lead wave soldering or the like, and also, in suitable processing steps, the resists defined as the "etching resists" that serve to define the conductive tracks on the circuit and then are washed away from the wafer by means of solution in alkali or suitable organic solvents, thereby turning the same into resists that can be classified as temporary.

Other temporary resists are used in other fields, such as for the protection of metal pieces or plates, which also withstand sanding operations, such that a product is created having differences in the surface graining on predetermined areas.

Temporary resists are also used in the glass processing field, in fact, to manufacture the so-called "frosted" glasses with half-transparency and surface roughness effects, hydrofluoric acid solutions are used which etch the glass thus creating the desired effect; when the same is selectively protected by means of a resist, the frosting effect will be obtained only on predetermined areas, thereby rough and semi-transparent areas will be formed together with areas that are still transparent as they are protected.

The products according to the invention differ from the other known types of resist, both because they belong to a completely new field, and because though having the characteristic of protection against chemical etching processing, yet have such formulation differences that double colouring effects are originated with completely and selectively etched areas.

Therefore, a further object of the invention is the use of alkali-insoluble inks as the resist, i.e. as the protection for at least one underlayer of alkali-soluble ink in a process for printing multicoloured elements in register, such as safety elements.

Further objects of the invention are the products obtained according to the above-mentioned process, which are characterized according to claim 12. These products have a backing, at least two layers of inks containing resins with an acid number greater than 20 and a partial layer of resin (i.e. transparent ink) with an acid number lower than 20 and substantially insoluble in the weakly basic aqueous solutions used in the process according to the invention.

The compositions and process form a system for printing multicoloured elements, which allows obtaining an effect that, in practice, cannot be substantially obtained with other process.

In fact, in the case of printing micro-characters in register, either when a colour is printed on another on recto, or a colour is printed on recto and the next one on verso, obtaining a perfect register is very difficult when not impossible. For this reason, images in register in two different colours one upon the other and forming images in negative, the same obtained on thin plastic films (19 micron or more) can be for example used as an anti-counterfeit element on labels, credit cards, wires, as they are difficult to reproduce with conventional techniques.

The invention will be now described in greater detail with reference to the (not in scale) drawings, which are given as illustrative and non-limiting examples, where:
- Fig. 1 and 2 are partial sectional views of a product according to the invention at two manufacturing steps;
- Fig. 3 is a perspective view of the product from Fig. 2;
- Fig. 4 is a perspective view of a further exemplary embodiment according to the invention.

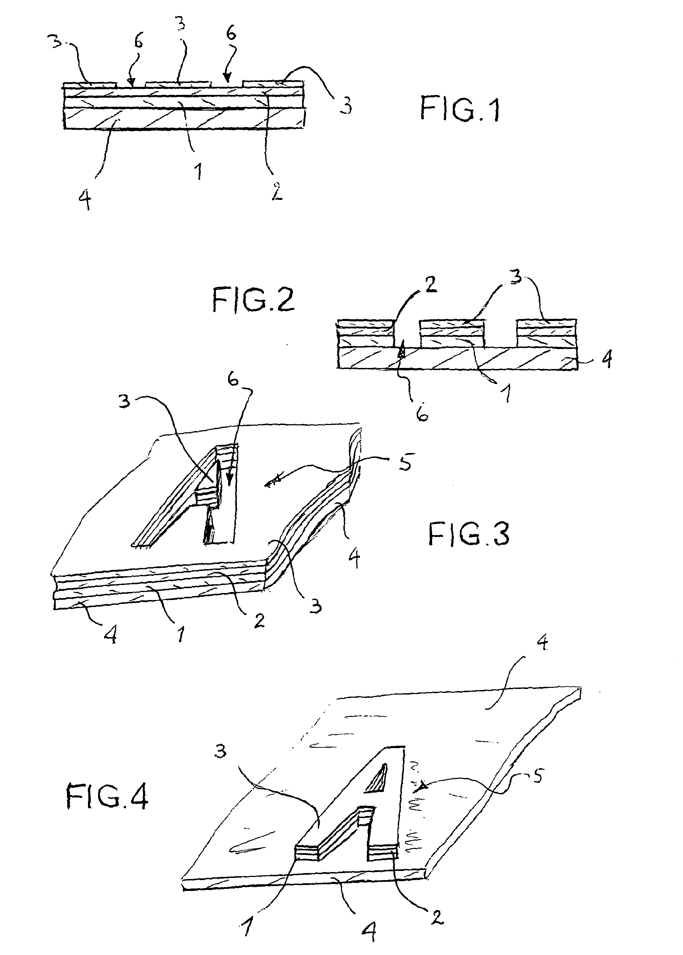

Referring first to Fig. 1 and 2, the product or multicoloured element 5 according to the invention comprises a backing 4, generally made of a flexible and preferably at least partially transparent material, and at least two layers of ink coloured in a different manner. A first layer 1 of ink is directly placed on the backing 4, and a second layer 2 of ink is placed on the layer 1. According to the invention above the layer 2 in some areas of the element 5 there is provided a layer 3 of transparent resin.

Depending on where the outer layer 3 is applied, an element is obtained as in Fig. 3 or as in Fig. 4. In both those elements, areas 6 that are not protected by a resist formed by the layer 3 are dissolved by being immersed in a basic aqueous solution, as will be explained below in greater detail.

As mentioned above, in order to obtain the products 5 according to the invention, inks have been used which contain resins having an acid number greater than 20, generally within the range of 20 to 250, and preferably greater than 50 and within the range of 50 to 240.

These resins are provided in the ink in a sufficient amount to provide the ink with properties of solubility in a basic aqueous solution in a short time, i.e. such as to allow dissolving the unprotected portions of two or more ink layers during a treatment in a tank. By the term "basic solutions" is meant those aqueous solutions having a pH within the range of 8.5 and 11.0, i.e. weakly basic aqueous solutions.

More particularly, the resins used have a different acid number: the ink used for the outermost layer (layer 2 in Fig. 1 and 2), which is the first to be etched by the basic solution, has an acid number greater than that of the lower layer 1 and in the order of 150-220, such as to be quickly dissolved and allow etching of layer 1, the innermost one, in a short time. The acid number of the inner ink layer 1 generally has an acid number within the range of 50 and 100, such as between 60 and 90.

Furthermore, the resins used for the layers 2 and 3 preferably have a different nature, such as to be compatible with each other and ensure good grip, but such as to use different solvents to avoid problems that may occur while second layer 2 is overprinted on first layer 1 and outer layer 3 on layer 2.

In other words, both the coloured inks 1 and 2 are characterized by containing resins with a high acid number, which can be thereby easily saponified. However, in an industrial process, it would not be possible to provide a full background printing of the layer 1 with an ink, such as yellow, and soon after overprinting the same, still on a full background, with a layer 2 obtained from an identical composition though in a different colour, such as red. In this case, by penetrating in the first colour, the second one would cause the first one to raise from the polyester film backing thereby generating corrugated and partially raised areas, which would not allow a suitable graphic definition to be obtained by means of overprinting with the transparent and permanent resist 3.

To solve this problem, the resins used are soluble in solvents different from each other. For example, the ink for the inner layer 1 contains a resin soluble in esters, particularly ethyl acetate, whereas the ink for the second layer 2 contains a resin soluble in alcohol. Thereby, the second layer 2 can not dissolve the first layer 1 and thereby generates a perfectly smooth printing surface.

Preferably, the permanent resist 3 which is applied as the third layer contains, in turn, a different solvent from that of layer 2, such as ethyl acetate that does not cause returns (partial dissolutions) of the second layer 2, as the latter is soluble in alcohol.

Resins suitable for use according to the present invention are more particularly resins of acrylic acid copolymers 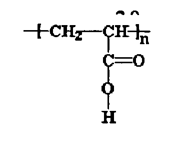 in esterified form, and styrene-maleic resins as the partial mono-ester form reaction between styrene and maleic anhydride.

The physico-chemical characteristics of a polyacrylate resin that can be used in the present invention are as follows:

| | |
|---|---|
| INCL / CTFA NAME | ACRYLATES COPOLYMER |
| PHYSICAL APPEARANCE | WHITE GRANULES |
| SOLID % | 100% |
| MOLECULAR WEIGHT | 180.000- 270.000 |
| ACID VALUE | 60-90 |
| TG°C | 32-38 |
| SPECIFIC WEIGHT | 1.150-1.300 |

A resin of this type is, for example, AVALURE AC 315 manufactured by Goodrich.

The physico-chemical characteristics of a styrene-maleic resin that can be used in the present invention are as follows:

| Appearance | White flakes |
|---|---|
| Acid value | 165 - 205 |
| TG°C | 48-74 |
| Molecular weight | 6.500-8.000 |
| Solid | 97% |

A resin of this type is, for example, SMA RESIN 1440F manufactured by CRAY VALLEY.

The production of inks suitable for the invention will be now described with reference to the following examples.

### EXAMPLE 1

### Process for obtaining ink for the first layer.

500 grams of ethyl acetate and 200 grams of propyl methyl ether are placed in a suitable vessel, and the two solvents are mixed under Cowless stirrer.

300 grams of acrylic resin is added as described above, still under stirring, and the stirring is continued until the resin is completely dissolved.

To the thus obtained transparent resin solution is added a yellow pigment (e.g. in accordance with the previously illustrated example) and ground in a suitable ball mill until a particle size lower than 2 microns is obtained.

The above-mentioned operations produce an ink with characteristics of withstanding the action of any acid etching and of being able to be easily dissolved by the action of weakly alkaline solutions, such as 1% sodium carbonate solutions, this being due to the reaction of the carboxylic groups being present in the acrylic acid.

### EXAMPLE 2

### Process for obtaining TEMPORARY Second coating.

400 grams of ethyl alcohol and 100 grams of ethyl acetate are placed in a suitable vessel, and the two solvents are mixed under Cowless stirrer.

450 grams of partially esterified styrene-maleic resin as described above are added, still under stirring, and the stirring is continued until the resin is completely dissolved.

The thus obtained transparent resin solution is added with a red pigment and ground on a suitable ball mill until a particle size lower than 2 microns is obtained.

The above-mentioned operations produce an ink with characteristics of withstanding the action of any acid etching, and on the other hand, of being able to be easily dissolved by the action of weakly alkaline solutions, such as 1% sodium carbonate solutions, as the preferred example, this being due to the reaction of the carboxylic groups generated by the unreacted maleic anhydride with styrene that in aqueous solution generates carboxylic groups by turning into maleic acid.

Suitable resins for providing the outer layer 3, or permanent resist layer, are alkali-resistant transparent resins, such as nitrocellulose having the formula C₂₄ H₃₇ (NO₃)₃O₂₀

The process for printing and obtaining the coloured elements will be now illustrated with reference to Fig. 1-3 and 4.

A transparent polyester film 4, e.g. having a thickness of 19 micron or more, is first full-background printed with the yellow-coloured composition from the Example 1, to form a first layer 1 on the polyester film backing 4. The thus obtained (alkali-soluble) layer 1 is dried and overprinted, still on a full background, with the red ink composition obtained according to the example 2 and then dried to give the second alkali-soluble layer 2.

A transparent layer 3 is then printed, for example a nitrocellulose-based one, on the layer 2. The transparent layer will be characterized by carrying inscriptions, symbols or drawings in negative.

The printed film is then dipped in a solution containing 1% sodium carbonate in water such that the free areas, i.e. those areas 6 not carrying the layer 3 of transparent resin, will be selectively saponified and solubilized in water according to the design given to the element 5.

The saponification will first involve layer 2 and then, again in register, the firstly deposited underlayer 1.

After washing in water, an element 5 will be obtained, in which areas 6 form a colourless drawing (Fig. 3) that can be seen in transparency through those areas released from the ink films, thereby providing a product characterized by drawings in register that are contoured by red colour when the film is looked at from the recto side and contoured by yellow colour when the film is looked at from the verso side.

The corresponding process can be also carried out in the reverse order, by applying the resist in positive, i.e. on the areas that one desires to read in red on the one side and in yellow on the other side; this embodiment is shown in Fig. 4, where the same components are referred to with the same numerals as in the previous figures. As may be noticed, in this embodiment the layer 3 of protective resist has prevented the underlying ink layers 1 and 2 to dissolve, so as to form the element 5, coloured and with the two layers in register, in positive.

## Claims

1. An ink for producing multicoloured elements in register, **characterized in that** it comprises at least one resin having an acid number greater than 20, said resin/s being provided in the ink composition in an amount sufficient for solubilizing the printed ink in a basic solution.

2. The ink according to claim 1, wherein said resin has an acid number within the range of 20 to 250.

3. The ink according to claim 1 or 2, wherein said resin is selected from acrylate copolymer resins and styrene-maleic resins.

4. A kit of parts, comprising a first coloured printable ink composition; a second printable ink composition in a colour other than that of the first composition and compatible with said first printable composition, said first and second compositions giving printed elements soluble in a basic solution, and a third transparent printable composition, compatible with at least said second resin, said third composition being insoluble in basic solutions.

5. Use of inks containing resins with an acid number grater than 20 for producing multicoloured elements in register.

6. A process for producing multicoloured effects in register by printing ink compositions according to any of the previous claims, **characterized by** the following steps: sequentially coating on a backing (4) a first printable ink (1) soluble in basic aqueous solutions, a second printable ink (2) soluble in basic aqueous solutions, at least partially overlapping said two compositions, applying on a selected area of the outer ink layer (2) a resin layer (3) insoluble in basic solutions to define an unprotected portion of inks that are soluble in basic solutions, and dipping the thus coated backing in a basic solution to remove in said basic solution those parts (6) of coloured inks that are not protected by the insoluble resin.

7. The process according to claim 6, wherein said first ink contains a resin having an acid number greater than 20 and said second ink contains a resin having an acid number greater than the acid number of the resin contained in said first ink.

8. The process according to claim 7, wherein said resin of the first ink is selected from acrylate copolymer resins and the resin of said second ink is selected from the styrene-maleic copolymers.

9. The process according to claim 7 or 8, wherein said alkali-insoluble resin is transparent.

10. The process according to claim 9, wherein said printable alkali-insoluble resin is cellulose nitrate.

11. Use of a printable resin, insoluble in a basic solution, according to claim 9 or 10 as a permanent resist in the production of multicoloured elements in register.

12. A multicoloured element in register (5) **characterized in that** it comprises a backing layer (4), at least two overlapped layers of a first (1) and second (2) inks soluble in basic solutions according to one of claims 1 to 3 and at least one layer (3) of resin insoluble in basic solutions, said insoluble layer (3) being arranged above the outermost (2) of said ink layers (1,2) and on portions thereof to define said element (5).

13. The element according to claim 12, **characterized in that** said backing layer (4) is made of a transparent material.
